(19) Europäisches Patentamt
European Patent Office
Office européen des brevets

(11) **EP 2 664 747 A2**

(12) **EUROPEAN PATENT APPLICATION**

(43) Date of publication:
**20.11.2013 Bulletin 2013/47**

(51) Int Cl.:
*F01D 25/00* (2006.01)  *F02B 77/04* (2006.01)
*F02C 7/30* (2006.01)  *F04D 29/70* (2006.01)

(21) Application number: **13163690.4**

(22) Date of filing: **15.04.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.05.2012 GB 201208479**

(71) Applicant: **Optimized Systems and Solutions
Limited
Derby, Derbyshire DE24 8BJ (GB)**

(72) Inventor: **Smith, Graham Colin
Swineshead, Bedfordshire MK44 2AH (GB)**

(74) Representative: **Yeomans, Victoria Jane Anora et
al
Rolls-Royce plc
Intellectual Property Dept WH20
PO Box 3
Bristol, South Gloucestershire BS34 7QE (GB)**

(54) **Engine wash optimisation**

(57) The present invention provides a method of optimising engine wash event scheduling. An underlying deterioration gradient and a total deterioration gradient are determined. A number of engine wash events, x, are set. Engine deterioration for x engine wash events is calculated. The washed engine cost of engine deterioration for x engine wash events is calculated. The calculation of engine deterioration is iterated for different x to optimise the number of engine wash events with respect to the cost of engine deterioration. Advantageously the method systematically optimises scheduling of wash events taking into account the underlying deterioration of the engine which cannot be recovered by engine washing and the cost of the engine wash events.

Figure 4

**Description**

The present invention relates to a method of optimising engine wash event scheduling.

A gas turbine engine achieves an average fuel flow during operation which has an associated cost. Over time the engine components become fouled by deposits, which reduce the engine efficiency and thereby increase the amount of fuel used. Thus the engine becomes more expensive to operate.

It is known that performing engine washing flushes away fouling material from the engine components and restores at least some of the engine performance with consequent benefits in fuel flow and resultant cost. Typically engine washing is performed at regular time intervals and/or when an engine is scheduled for other maintenance activities. There is a cost associated with performing an engine wash event.

One disadvantage of these methods of scheduling engine wash events is that the cumulative cost of engine wash events may exceed the cumulative cost benefit from cleaning the engine components.

The present invention provides a method of optimising engine wash event scheduling that seeks to address the aforementioned problems.

Accordingly the present invention provides a method of optimising engine wash event scheduling comprising: a) determining an underlying deterioration gradient; b) determining a total deterioration gradient; c) setting a number of engine wash events, x; d) calculating engine deterioration for x engine wash events; e) calculating the washed engine cost of engine deterioration for x engine wash events; and f) iterating steps c) and d) for different x to optimise the number of engine wash events with respect to the cost of engine deterioration.

Advantageously the method systematically optimises scheduling of wash events taking into account the underlying deterioration of the engine which cannot be recovered by engine washing and the cost of the engine wash events.

The step of determining the underlying deterioration gradient may comprise steps of: in a fuel flow data series, identifying engine wash events; for each data subset between consecutive engine wash events, identifying a minimum point being a post-engine wash event fuel flow, a maximum point being a pre-engine wash event fuel flow, and a gradient therebetween; and calculating the underlying deterioration gradient by averaging the gradients between each adjacent pair of minimum points in the data series. The gradient between each adjacent pair of minimum points has a gradient therebetween; the underlying deterioration gradient is then the average of those gradients. The step of identifying engine wash events may comprise identifying discontinuities in the data or comparing the data to known engine wash event times.

The step of determining the total deterioration gradient may comprise steps of: in a fuel flow data series, identifying engine wash events; for each data subset between consecutive engine wash events, identifying a minimum point being a post-engine wash event fuel flow, a maximum point being a pre-engine wash event fuel flow, and a gradient therebetween; and calculating the total deterioration gradient by averaging the gradients of all the data subsets. The step of identifying engine wash events may comprise identifying discontinuities in the data or comparing the data to known engine wash event times.

The step of calculating engine deterioration may comprise steps of: setting x engine wash events and sub-dividing the time by x to give x time segments; for each time segment: i) calculating a segment underlying deterioration by integrating the underlying deterioration gradient by the time segment length; ii) calculating a segment total deterioration by integrating the total deterioration gradient by the time segment length; iii) subtracting the segment underlying deterioration from the segment total deterioration to give the segment deterioration; and summing the segment deteriorations to give the engine deterioration. The step of setting the segment time length may comprise multiplying the segment time length by an utilisation factor. The utilisation factor may be a mean number of hours that an engine is run per day where the time axis is elapsed calendar days.

The step of calculating the washed engine cost may comprise steps of: multiplying the engine deterioration by a pre-determined cost multiplier to give the cost of engine deterioration for x engine wash events; and adding the cost of x engine washes to the cost of engine deterioration for x engine wash events to give a washed engine cost. The pre-determined cost multiplier may be a fuel price, a monetary cost of $CO_2$ emissions, or another opportunity cost.

There may be a further step between steps e) and f) comprising: subtracting the washed engine deterioration cost from an engine deterioration cost where x=0 to give a washed cost saving. This is the cost relative to a baseline cost of engine deterioration with no engine washes, which includes both underlying and recoverable engine deterioration.

The step of iterating the steps for different x may comprise optimising the number of engine wash events with respect to the washed cost saving.

Any combination of the optional features is encompassed within the scope of the invention except where mutually exclusive.

The present invention will be more fully described by way of example with reference to the accompanying drawings, in which:

> Figure 1 is a sectional side view of a gas turbine engine.
> Figure 2 is a graph of exemplary turbine gas temperature data against time.
> Figure 3 is a graph of trends in exemplary fuel flow against time.

Figure 4 is a graph of a schedule of two engine wash events.

Figure 5 is a graph of a schedule of ten engine wash events.

Figure 6 is a graph of cost savings for different numbers of engine wash events relative to no engine wash events.

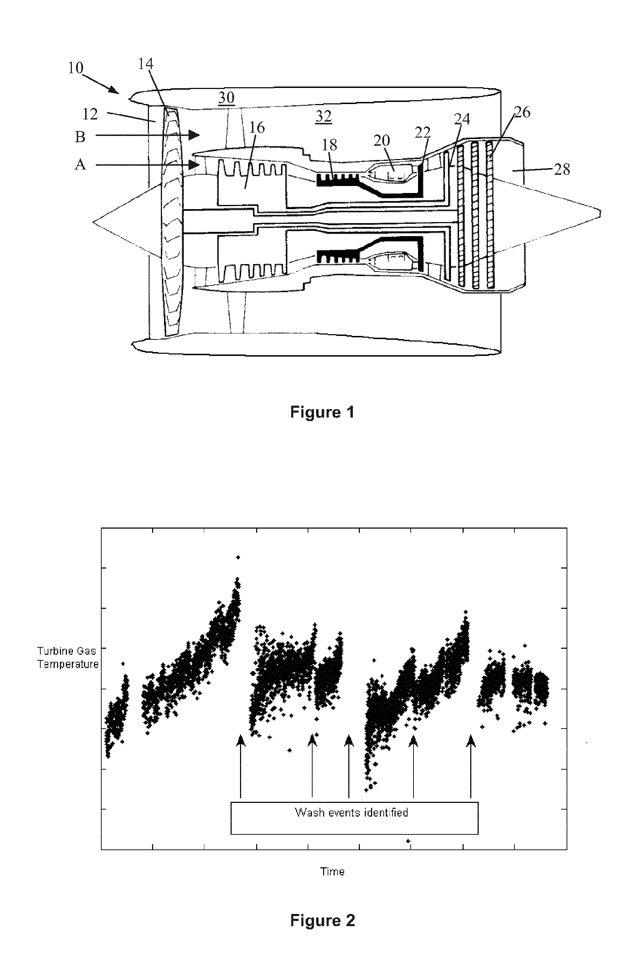

A gas turbine engine 10 is shown in Figure 1 and comprises an air intake 12 and a propulsive fan 14 that generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. A nacelle 30 surrounds the gas turbine engine 10 and defines, in axial flow B, a bypass duct 32.

Fouling material accrues during operation of the engine 10, particularly on the rotor blades of the fan 14, compressors 16, 18 and turbines 22, 24, 26. This material accretion impacts the fuel flow efficiency of the engine 10 because it increases aerodynamic losses within the components. A higher turbine gas temperature is therefore required, and thus a higher fuel flow, for the same engine thrust. An engine wash event is defined as an event in which the gas turbine engine 10 is flushed through with water or another cleaning fluid to remove at least some of the fouling material from the engine components.

Figure 2 shows a typical plot of turbine gas temperature against time for one or more defined points in the engine cycle for many operational cycles of the engine 10. Note that the scale covers a large time period and therefore points are strongly clustered. The data has been processed by known methods to remove anomalous points and noise. The data series exhibits identifiable discontinuities which result from engine wash events, after which the turbine gas temperature drops. Between the engine wash events, the underlying trend of the data is that the turbine gas temperature increases over time. An equivalent plot of fuel flow against time may also be plotted.

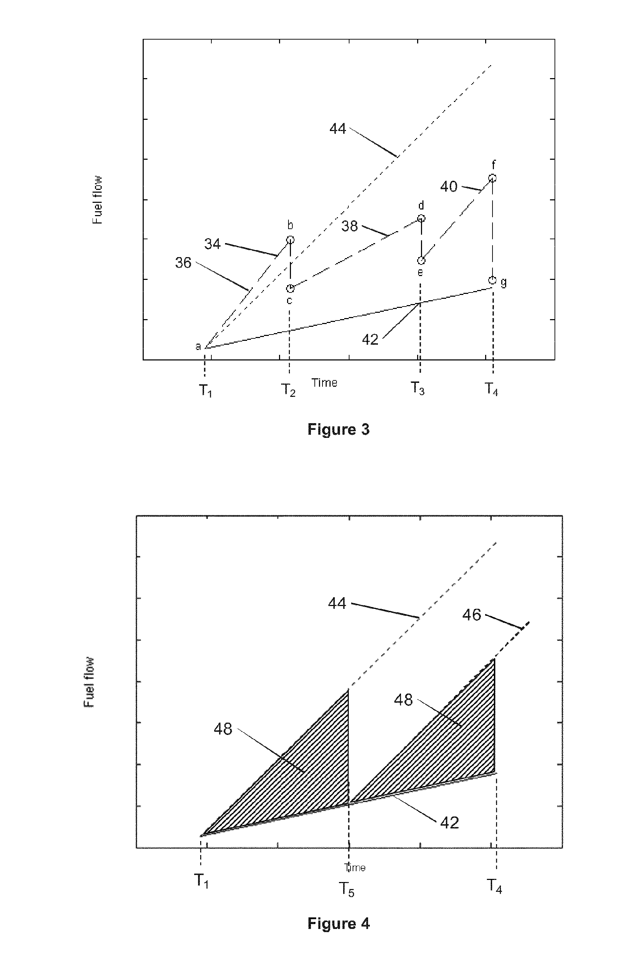

Figure 3 illustrates exemplary trended data in terms of fuel flow, rather than turbine gas temperature, against time. The discontinuous trend line 34 is plotted rather than the data points and begins at time $T_1$. The trend line 34 is based on averages of the data points. There are three portions 36, 38, 40 to the trend line 34 which each have different gradients, although this need not be the case. The minimum and maximum points of the three portions are denoted by the letters a to g. Thus the first portion 36 is between minimum point a and maximum point b; the second portion 38 is between minimum point c and maximum point d; and the third portion 40 is between minimum point e and maximum point f. Engine wash events occur at times $T_2$, $T_3$ and $T_4$ and cause the drop in fuel flow from, respectively, maximum point b to minimum point c, maximum point d to minimum point e, and maximum point f to minimum point g.

The gradient of each portion of the trend line 34 is calculated by subtracting the fuel flow at the minimum point a, c, e from the fuel flow at the maximum point b, d, f and dividing the result by the time between the minimum and maximum points. Thus the gradients are, respectively:

$$G_{36} = \frac{Fuelflow_b - fuelflow_a}{T_2 - T_1} ,$$

$$G_{38} = \frac{Fuelflow_d - fuelflow_c}{T_3 - T_2} \quad \text{and}$$

$$G_{40} = \frac{Fuelflow_f - fuelflow_e}{T_4 - T_3} . \qquad .$$

It will be apparent to the skilled reader that although the exemplary data comprises three portions to the trend line 34 other data series may have more or fewer portions. For example, the length of time analysed may be fixed and the trend line 34 be based on moving averages from the data. Thus as additional data points are recorded the moving averages are updated and the trend line 34 will gradually alter. Eventually, the first portion 36 of the trend line 34 will be eliminated from the data and a further portion may be added to the trend line 34 after the third portion. Alternatively, the data to be analysed may be defined as that spanning a given number of portions, for example three portions. Thus the data is updated only when a further portion is available, at which point the first portion 36 is removed from the data series.

The increase in fuel flow over time represents a deterioration of engine performance as more fuel is used than was required previously for the same operational duty. The engine deterioration is comprised of two parts; firstly an amount of deterioration caused by fouling which can be recovered by engine washing and secondly an amount of underlying deterioration caused by component wear and the like which cannot be recovered.

The gradient of underlying deterioration is calculated by averaging the gradients between the minimum points, that is averaging the gradients between minimum point a and minimum point c, minimum point c and minimum point e, and minimum point e and minimum point g. Thus the fuel flow does not return to its first level following each engine wash event but gradually increases as the engine ages and accumulates more damage to its components. The underlying deterioration gradient is a measure of the rate at which that increase occurs and is shown as line 42 on Figure 3. The underlying deterioration of the engine at any point in time can be calculated by multiplying the underlying deterioration gradient by the time elapsed from the beginning of the data series to the point of interest.

The recoverable deterioration is calculated in a two-step process. First the total deterioration is determined and then the underlying deterioration is subtracted from it to leave the resultant recoverable deterioration. The gradient of total deterioration is calculated by averaging the gradients of the portions 36, 38, 40 of the trend line 34; thus the gradient of total deterioration is the average of $G_{36}$, $G_{38}$ and $G_{40}$. This is a measure of the rate of total deterioration and is shown as line 44 on Figure 3. The total deterioration of the engine at any point in time is then calculated by multiplying the total deterioration gradient by the time elapsed from the beginning of the data series to the point of interest. The recoverable deterioration is illustrated by the vertical distance between the total deterioration line 44 and the underlying deterioration line 42.

To determine the cost of the deterioration, the total deterioration at the time of interest is read off line 44 or calculated from the steps above. The total deterioration is then multiplied by a pre-determined cost multiplier. The cost may be expressed in fuel flow, percentage increase in fuel flow, $CO_2$ emissions, or be a monetary value relating to any of these factors or a combination of them depending on the requirements of the specific application of the invention. The cost of the engine deterioration is then used as a baseline against which to measure the cost saving from different engine washing schedules.

The method of the present invention comprises setting a number, x, of engine wash events, calculating the cost saving from that number of engine wash events, subtracting the cost of those events to give a net benefit and then comparing the cost of scheduling that number of engine wash events with the baseline cost of the engine deterioration. The method is then iterated with a different number of engine wash events and the number of events is optimised to minimise the cost or maximise the net benefit.

Figure 4 illustrates an example where there are two engine wash events; thus x=2. The engine wash events are assumed to occur at regular time intervals and therefore the time span of the data, $T_4$-$T_1$, is bisected to give $T_5$ and engine wash events are scheduled at $T_5$ and $T_4$. It is further assumed that each engine wash event recovers all the recoverable deterioration of the engine 10. Thus the fuel flow over time tracks the total deterioration line 44 from $T_1$ until $T_5$. At $T_5$ a first engine wash event occurs and the fuel flow drops to meet the underlying deterioration line 42. The fuel flow then increases at the total deterioration gradient, tracking a line 46 which is parallel to line 44 until $T_4$ when the second engine wash event occurs and the fuel flow again drops to meet the underlying deterioration line 42.

The engine deterioration, and thus the extra fuel required due to engine component fouling, with two engine wash events is thus the area under the fuel flow line described and above the underlying deterioration line 42. This is illustrated in Figure 4 as the shaded areas 48. The cost of the engine deterioration with two engine wash events is the shaded areas 48 multiplied by the pre-determined cost multiplier, plus the cost of two engine wash events. The cost saving of the two engine wash event schedule is the baseline cost of the engine deterioration with no engine washing minus the cost of the engine deterioration with two engine wash events.

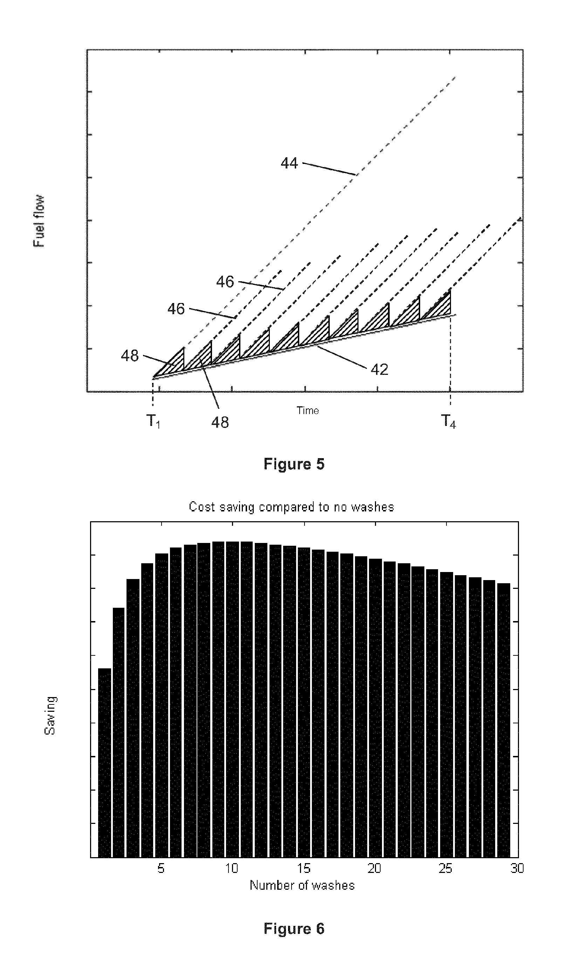

Figure 5 illustrates another example where there are ten engine wash events, thus x=10. As with the example in Figure 4, the engine wash events are assumed to occur at regular time intervals and therefore the time span of the data, $T_4$-$T_1$, is divided equally into ten. In common with the previous example, it is further assumed that each engine wash event recovers all the recoverable deterioration of the engine 10 so that fuel flow over time tracks the total deterioration line 44 from $T_1$ until the first engine wash event. At this time the fuel flow drops to meet the underlying deterioration line 42. The fuel flow then increases at the total deterioration gradient, tracking a line 46 parallel to the line 44, until the next engine wash event occurs, when the fuel flow again drops to meet the underlying deterioration line 42. This pattern is repeated for the remaining engine wash events until the final, tenth engine wash event at $T_4$.

The engine deterioration, and thus the extra fuel required due to engine component fouling, with ten engine wash events is thus the sum of the shaded areas 48, being the area between the fuel flow line described and the underlying deterioration line 42. The cost of the engine deterioration with ten engine wash events is the engine deterioration multiplied by the pre-determined cost multiplier, plus the cost of ten engine washes. The cost saving is this cost subtracted from the baseline cost of engine deterioration with no engine wash events.

In order to optimise the engine wash event scheduling, further examples of the number of engine wash events to be conducted between $T_1$ and $T_4$ are explored and the cost saving of each is recorded. Figure 6 is a graph of the cost saving relative to the cost of engine deterioration with no engine wash events, for different numbers of engine wash events. The scheduling can be optimised mathematically or graphically by determining the largest cost saving. As illustrated in exemplary Figure 6 it can be seen that ten engine wash events is optimum because the cost saving is larger than for any other number of engine wash events plotted. Furthermore, it can be seen that the trend is that more engine wash events reduces the cost saving for numbers of engine wash events greater than ten.

It will be apparent to the skilled reader that the data from which the total deterioration gradient and underlying deterioration gradient are calculated will be dependent at least on the engine type. Thus the data obtained from one engine type should only be used to schedule engine wash events for engines of the same type.

The data may also be affected by maintenance of the engine 10, for example replacement of one or more components within the engine 10 will affect its fuel flow. Thus a more sophisticated embodiment of the method of the present invention will take into account variations in the data due to other factors and will thus determine the underlying deterioration gradient and total deterioration gradient accordingly. In particular, one or both of these gradients may change over time such that line 42 and/or line 44 may be non-linear or may be comprised of two or more contiguous but non-parallel sections. This will clearly affect the engine deterioration cost and may result in a different number of engine wash events being optimal.

A further modification of the method of the present invention comprises varying the time interval between engine wash events so that the time intervals are irregular. Although this makes the method more lengthy to implement, because there are many more possibilities with the regularity constraint removed, it may improve the optimisation. However, since the deterioration gradients are linear, it is probable that regularly timed engine wash events will be the most efficient. Removing the regularity constraint also gives the option of tying engine wash events to times when routine maintenance and/or inspections are scheduled, although such intervals may not be optimal. This is beneficial because it is more efficient to wash the engine 10 when it has already been scheduled for the aircraft using the engine 10 to be grounded, or for the marine vessel, industrial machine or other power sink to be scheduled to use a different or no power source instead of the engine 10.

The data from which the total deterioration gradient and the underlying deterioration gradient are calculated may be based on the actual fuel flow rate for each engine cycle or may be based on the amount of fuel used in an engine cycle averaged over the time elapsed during that cycle. Although the former is more accurate, it may be easier to obtain the latter type of data. For example, the latter data will not take into account changes in engine use during a cycle, for example take off, climb and descent for an aircraft gas turbine engine 10, but will presume a constant fuel flow throughout the cycle, for example assuming that the whole cycle comprises cruise.

The costs may be in terms of money or in other terms, such as fuel used, output power or $CO_2$ emitted.

Although the present invention has been described in relation to a ducted fan gas turbine engine 10 for an aircraft, it is equally applicable to a gas turbine engine 10 used for any other application such as marine power, wind power or industrial power. The invention also finds utility for any type of engine which deteriorates over time and has recoverable deterioration which can be recovered by engine washing, for example a steam turbine or a propeller gas turbine engine. Similarly, although a three-shaft engine 10 has been described the method of the present invention has equal felicity for a two-shaft gas turbine engine. Such washing may use water, detergent, a mixture of water and detergent, another fluid, another fluid mixed with detergent, solid particles such as nut shells or any other washing product known to the skilled reader.

The method of the present invention is preferably encompassed in computer-implemented code and stored on a computer-readable medium. It is thus a computer-implemented method of optimising engine wash event scheduling. The method may be implemented on a basic computer system comprising a processing unit, memory, user interface means such as a keyboard and/or mouse, and display means. The method is preferably performed 'offline' on time-series data which has been measured and recorded previously. Alternatively it may be performed 'real-time', that is at the same time that additional time-series data is measured. In this case the computer may be coupled to the gas turbine engine 10. In this case the computer may be an electronic engine controller or another on-board processor. Where the gas turbine engine 10 powers an aircraft, the computer may be an engine controller, a processor on-board the engine 10 or a processor on-board the aircraft.

## Claims

1. A method of optimising engine wash event scheduling comprising:

   a) determining an underlying deterioration gradient;
   b) determining a total deterioration gradient;
   c) setting a number of engine wash events, x;
   d) calculating engine deterioration for x engine wash events;
   e) calculating the washed engine cost of engine deterioration for x engine wash events; and
   f) iterating steps c) and d) for different x to optimise the number of engine wash events with respect to the cost of engine deterioration.

2. A method as claimed in claim 1 wherein step 1a) comprises steps of:

   a) in a fuel flow data series, identifying engine wash events;
   b) for each data subset between consecutive engine wash events, identifying: a minimum point being a post-engine wash event fuel flow; a maximum point being a pre-engine wash event fuel flow; and a gradient therebetween; and
   c) calculating the underlying deterioration gradient by averaging the gradients between each adjacent pair of minimum points in the data series.

3. A method as claimed in any preceding claim wherein step 1b) comprises steps of:

a) in a fuel flow data series, identifying engine wash events;

b) for each data subset between consecutive engine wash events, identifying: a minimum point being a post-engine wash event fuel flow; a maximum point being a pre-engine wash event fuel flow; and a gradient therebetween; and

c) calculating a total deterioration gradient by averaging the gradients of all the data subsets.

4. A method as claimed in claim 2 or claim 3 wherein identifying engine wash events comprises identifying discontinuities in the data.

5. A method as claimed in claim 2 or claim 3 wherein identifying engine wash events comprises comparing the data to known engine wash event times.

6. A method as claimed in any preceding claim wherein step 1d) comprises steps of:

a) setting x engine wash events and sub-dividing the time by x to give x time segments;
b) for each time segment:

i. calculating a segment underlying deterioration by integrating the underlying deterioration gradient by the time segment length;
ii. calculating a segment total deterioration by integrating the total deterioration gradient by the time segment length;
iii. subtracting the segment underlying deterioration from the segment total deterioration to give the segment deterioration; and

c) summing the segment deteriorations to give the engine deterioration.

7. A method as claimed in claim 6 wherein step 6a) comprises multiplying the segment time length by an utilisation factor.

8. A method as claimed in any preceding claim wherein step 1e) comprises steps of:

a) multiplying the engine deterioration by a pre-determined cost multiplier to give the cost of engine deterioration for x engine wash events; and
b) adding the cost of x engine washes to the cost of engine deterioration for x engine wash events to give a washed engine cost.

9. A method as claimed in any preceding claim wherein a further step between steps 1e) and 1f) comprises:

subtracting the washed engine deterioration cost from an engine deterioration cost where x=0 to give a washed cost saving.

10. A method as claimed in claim 9 wherein step 1f) comprises optimising the number of engine wash events with respect to the washed cost saving.

11. A computer program having instructions adapted to carry out the method according to any preceding claim.

12. A computer readable medium, having a computer program recorded thereon, wherein the computer program is adapted to make the computer execute the method according to any of claims

13. A computer program comprising the computer readable medium as claimed in claim 12.

**Figure 1**

**Figure 2**

Figure 3

Figure 4

Figure 5

Cost saving compared to no washes

Number of washes

Figure 6